Europäisches Patentamt

European Patent Office

Office européen des brevets

(11) Veröffentlichungsnummer: **0 262 449 B1**

(12) **EUROPÄISCHE PATENTSCHRIFT**

(45) Veröffentlichungstag der Patentschrift: 27.02.91

(51) Int. Cl.5: **C01B 13/10**, C02F 1/78

(21) Anmeldenummer: 87112915.1

(22) Anmeldetag: 04.09.87

(54) **Verfahren zur Erzeugung von Ozon.**

(30) Priorität: 27.09.86 DE 3632937

(43) Veröffentlichungstag der Anmeldung:
06.04.88 Patentblatt 88/14

(45) Bekanntmachung des Hinweises auf die
Patenterteilung:
27.02.91 Patentblatt 91/09

(84) Benannte Vertragsstaaten:
CH DE FR GB LI

(56) Entgegenhaltungen:
US-A- 4 101 296
US-A- 4 430 306

LINDE BERICHTE AUS TECHNIK UND WIS-
SENSCHAFT, Band 49, Juli 1981, Seiten 9-13,
Linde AG, Wiesbaden, DE; E. LASSMANN et
al.: "Wirtschaftliche Ozonerzeugung aus
Sauerstoff durch die Linde-
Druckwechseladsorptionsanlage"

(73) Patentinhaber: BBC Brown Boveri AG
Haselstrasse
CH-5401 Baden(CH)

(72) Erfinder: Gaia, Franco
Rossee
CH-6987 Caslano(CH)
Erfinder: Klein, Hans-Peter, Dr.
Boldistrasse 84
CH-5415 Rieden(CH)

## Beschreibung

### Technisches Gebiet der Erfindung

Die Erfindung bezieht sich auf ein Verfahren zur Erzeugung von Ozon. Sie betrifft insbesondere ein Verfahren, bei welchem Luft im wesentlichen in Sauerstoff und Stickstoff getrennt wird, der Sauerstoff einem Ozonisator zugeführt, das den Ozonisator verlassende Ozon-Sauerstoff-Gemisch einem Ozonverbraucher zugeführt und das den Ozonverbraucher verlassende, im wesentlichen Sauerstoff und Restozon enthaltende Gasgemisch aufbereitet und in den Kreislauf rezirkuliert wird.

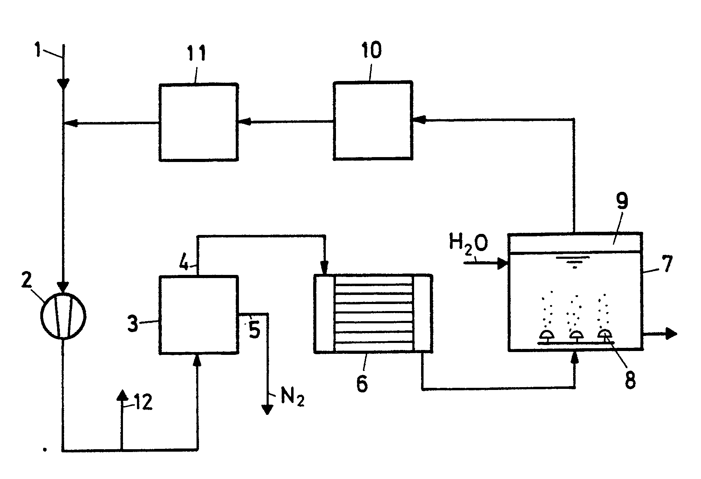

Die Erfindung nimmt dabei Bezug auf einen Stand der Technik, wie er sich beispielsweise aus der DE-Publikation "LINDE - Berichte aus Technik und Wissenschaft", Band 49/1981, Seite 9-13, insbesondere Bild 2B auf Seite 10, ergibt.

### Technologischer Hintergrund

Ozon ist ein äusserst starkes und schnell reagierendes Oxidationsmittel. Es wird in steigendem Umfang zur Desinfektion von Trinkwasser und Abwasserbehandlung eingesetzt.

Zur Erzeugung von Ozon wird in der Regel die stille elektrische Entladung angewendet. Weil luftbetriebene Ozonisatoren einen vergleichsweise geringen Wirkungsgrad aufweisen, - nur ca. 5 % der aufgewandten elektrischen Energie werden zur Umwandlung von Sauerstoff in Ozon genutzt, ist man in den letzten Jahren dazu übergegangen, anstelle von Luft ein Einsatzgas zu verwenden, das bis zu 90 Gew.% Sauerstoff und mehr aufweist. Auf diese Weise konnte die Energieausbeute auf 8-10 % gesteigert werden, und dies bei kleinerem Platzbedarf und höherer Ozonkonzenration.

Für die Sauerstoffbereitstellung werden entweder Luftverflüssigungsanlagen oder Druckwechsel-Adsorptions (PSA)-Anlagen eingesetzt.

Luftverflüssigungsanlagen sind sehr aufwendig und können nur für grosse Sauerstoffmengen eingesetzt werden. Druckwechsel-Adsorptionsanlagen werden normalerweise für die volle Sauerstoffmenge ausgelegt und sind deshalb sehr teuer.

### Kurze Beschreibung der Erfindung

Ausgehend vom Bekannten liegt der Erfindung die Aufgabe zugrunde, ein Verfahren zur Erzeugung von Ozon anzugeben, das bei hoher Ozonausbeute mit einfachen Anlagekomponenten realisiert werden kann und das insbesondere den Einsatz kleinerer Druckwechsel-Adsorptionsanlagen ermöglicht.

Diese Aufgabe wird erfindungsgemäss dadurch gelöst, dass das den Ozonverbraucher verlassende Gasgemisch einem Restozonvernichter zugeführt und dort vom Restozon befreit und anschliessend unter Ueberdruck an den Eingang einer Druckwechsel-Adsorptions-Anlage zurückgeführt wird, wobei die gesamte Anlage so betrieben wird, dass dem Ozonisator als Einsatzgas ein Gasgemisch zugeführt wird, das zwischen 90 und 98 Gew.% Sauerstoff enthält.

Die Vorteile des erfindungsgemässen Verfahrens stellen sich wie folgt dar:

- Der Ozonerzeuger arbeitet stets mit einem sauerstoffangereichten Einsatzgas, d.h. mit hohem Wirkungsgrad;
- der unverbrauchte Sauerstoff wird zum Ozonerzeuger zurückgeführt, sodass die Druckwechsel-Adsorptionsanlage für eine vergleichsweise kleine Stickstoff-Adsorption ausgelegt werden kann;
- die der Druckwechsel-Adsorptionsanlage vorgeschaltete Verdichtungsstufe ist nicht kritisch und verlangt keine sogenannte "Reinsauerstoff-Ausführung", weil die Sauerstoff-Konzentration an dieser Stelle stets kleiner als 90 Gew.% ist;
- der Sauerstoff-Strom am Austritt der Druckwechsel-Adsorptionsstufe ist kontinuierlich - intermittierend ist lediglich die Stickstoff-Austragung;
- das Verfahren ist energetisch sehr interessant und eignet sich insbesondere für die Behandlung von Trinkwasser. Bei Anwendung des Verfahrens zur Ozonisierung anderer Produkte ist allenfalls eine zusätzliche Reinigungsstufe im Sauerstoffkreislauf notwendig;
- die Gastrocknung und die Sauerstoff-Anreicherung erfolgen in der selben Apparatur.

### Kurze Beschreibung der Zeichnung

In der einzigen Figur der Zeichnung ist ein Ausführungsbeispiel einer Ozonerzeugungsanlage dargestellt, die nach dem erfindungsgemässen Verfahren arbeitet und zur Behandlung von Trinkwasser einsetzbar ist.

### Detaillierte Beschreibung der Erfindung

Der Ozonerzeugungsanlage wird bei 1 filtrierte Luft zugeführt. Ueber einen Verdichter 2 gelangt die Luft in eine Druckwechsel-Adsorptionsanlage 3 und wird dort in bekannter Weise im wesentlichen in Sauerstoff und Stickstoff getrennt. Das Grundprinzip der Trennung von Stickstoff und Sauerstoff nach dem Druckwechsel-Adsorptionsverfahren (PSA-Verfahren) beruht bekanntlich darauf, dass zum Beispiel zeolitische Molekularsiebe aufgrund unterschiedlichen Adsorptionsvermögens bevorzugt den Stickstoff vor dem Sauerstoff absorbieren und sich somit der Stickstoff im Porensystem der zeolitischen Molekularsiebe anreichert (vgl. hierzu DE-Zeitschrift gwf-gas/erdgas 116 (1975) Heft 9, Seiten 382-386).

Zusätzlich wird in der PSA-Anlage das Gas auf den verlangten Taupunkt getrocknet. 90 bis 98 Gew.% Sauerstoff und ansonsten Stickstoff enthaltendes Gas verlässt die PSA-Anlage bei 4, während bei 5 der im Verfahren nicht weiter benötigte Stickstoff abgeführt wird. Das sauerstoffreiche Gasgemisch gelangt in einen Ozonisator 6, der nach dem Prinzip der stillen elektrischen Entladung arbeitet und den üblichen Aufbau besitzt.

Im Ozonisator 6 wird ein Teil des Sauerstoffs in Ozon umgewandelt. Das Ozon-Sauerstoff-Gemisch wird einem Ozonverbraucher, im Beispielsfall ein geschlossenes Wasserbecken 7, durch das zu behandelndes Trinkwasser geleitet wird, zugeführt. Im Wasserbecken 7 sind im Bodenbereich Begaser 8 angeordnet. Nicht verbrauchtes Ozon, Sauerstoff und aus dem Wasser herausgelöste andere Gase sammeln sich im oberen Abschnitt 9 des Wasserbeckens und gelangen von dort aus in einen Restozonvernichter 10. Dieser besteht im einfachsten Fall aus einem Aktivkohlefilter oder ist als Heizvorrichtung ausgebildet, in welcher das Ozon thermisch zersetzt wird. Praktisch von Ozonresten befreites Gas gelangt dann über eine optionale Gasreinigungsstufe 11 zurück zum Verdichter 2 und damit zurück in den Kreislauf. Durch diese Sauerstoff-Rückführung erhöht sich der Anteil des Sauerstoffs in dem Gas, das der PSA-Anlage zugeführt wird. Weil der Anlage nur soviel Luft - also Sauerstoff-Stickstoff-Gemisch - zugeführt werden muss, um die "Verluste" durch Umwandlung des Sauerstoffs in Ozon und Absorption im Ozonverbraucher 7 zu decken, kann die PSA-Anlage wesentlichen kleiner aus gelegt werden, als es bei den bisher bekannten Ozonerzeugungsanlagen der Fall ist. Ein weiterer Vorteil ergibt sich daraus, dass in der PSA-Anlage 3 dem Gasgemisch Feuchtigkeit bis zu einem Taupunkt von kleiner als -50° C entzogen wird, sodass eine separate Einrichtung zur Gastrocknung entbehrlich ist.

Je nach Betriebs- und Prozessbedingungen kann es vorkommen, dass sich im Kreislauf ein Anteil schädlicher Gase befindet, zum Beispiel dass der $CO_2$-Anteil im Kreislauf zu hoch wird. Um diese Gase aus dem Kreislauf zu entfernen, ist im Zuge der Leitung vom Verdichter zur PSA-Anlage eine Abgasleitung (purge) 12 angeordnet.

Das erfindungsgemäss Verfahren eignet sich neben der Behandlung von Trinkwasser selbstverständlich auch zur Ozonisierung von Abwasser. Es kann generell dort angewandt werden, wo Ozon direkt beim Verbraucher erzeugt werden muss. Dabei bedarf es grundsätzlich nur der Anpassung der Gasreinigungsstufe an den jeweiligen Prozess, um Verunreinigungen, die vom Verbraucher her kommen, vom Verdichter, der PSA-Anlage und dem Ozonisator fernzuhalten.

## Ansprüche

1. Verfahren zur Erzeugung von Ozon, bei welchem Luft im wesentlichen in Sauerstoff und Stickstoff getrennt wird, der Sauerstoff einem Ozonisator (6) zugeführt, das den Ozonisator verlassende Ozon-Sauerstoff-Gemisch einem Ozonverbraucher (7) zugeführt und das den Ozonverbraucher verlassende, im wesentlichen Sauerstoff und Restozon enthaltende Gasgemisch aufbereitet und in den Kreislauf rezirkuliert wird, dadurch gekennzeichnet, dass das den Ozonverbraucher (7) verlassende Gasgemisch einem Restozonvernichter (10) zugeführt und darin vom Restozon befreit und anschliessend unter Ueberdruck an den Eingang einer Druckwechsel-Adsorptionsanlage (3) zurückgeführt wird, wobei die gesamte Anlage so betrieben wird, dass dem Ozonisator (6) ein Gasgemisch als Einsatzgas zugeleitet wird, das zwischen 90 und 98 Gew.% Sauerstoff enthält.

2. Verfahren nach Anspruch 1, dadurch gekennzeichnet, dass die Restozonvernichtung auf thermischem oder auf dem katalytischen Wege erfolgt.

3. Verfahren nach Anspruch 1, dadurch gekennzeichnet, dass das von Restozon befreite Gasgemisch vor Passieren der Druckwechsel-Adsorptionsanlage (3) gereinigt wird.

4. Verfahren nach Anspruch 1, dadurch gekennzeichnet, dass in der Druckwechsel-Adsorptionsanlage (3) Gas getrocknet und in ein sauerstoffreiches Gas zerlegt wird.

## Claims

1. Process for the generation of ozone, in which air is separated into essentially oxygen and nitrogen, the oxygen is fed to an ozonizer (6), the ozone/oxygen mixture leaving the ozonizer is fed to an ozone consumer (7) and the gas mixture, leaving the ozone consumer and essentially containing oxygen and residual ozone, is processed and returned into the circulation, characterized in that the gas mixture leaving the ozone consumer (7) is fed to a residual ozone destroyer (10) and freed therein of residual ozone and then recycled under elevated pressure to the inlet of a pressure-swing adsorption unit (3), the entire installation being operated in such a way that a gas mixture, which contains between 90 and 98% by weight of oxygen, is fed as the feed gas to the ozonizer (6).

2. Process according to Claim 1, characterized in that the destruction of residual ozone is effected by thermal or catalytic means.

3. Process according to Claim 1, characterized in that the gas mixture freed of residual ozone is purified before passing through the pressure-swing adsorption unit (3).

4. Process according to Claim 1, characterized in that, in the pressure-swing adsorption unit (3), gas is dried and separated to give an oxygen-rich gas.

**Revendications**

1. Procédé de production d'ozone, dans lequel on sépare l'air essentiellement en oxygène et en azote, on envoie l'oxygène dans un générateur d'ozone (6), on envoie le mélange oxygène-ozone quittant le générateur d'ozone dans un consommateur d'ozone (7), on prépare le mélange gazeux contenant essentiellement de l'oxygène et de l'ozone résiduel, qui quitte le générateur d'ozone, et on le recycle dans le circuit, caractérisé en ce que le mélange gazeux quittant le consommateur d'ozone (7) est envoyé dans un destructeur de l'ozone résiduel (10) et y est débarrassé de l'ozone résiduel, et qu'il est ensuite renvoyé, sous surpression, à l'entrée d'une installation d'adsorption à variation de pression (3), l'installation dans son ensemble étant conduite de telle manière que l'on envoie dans le générateur d'ozone (6), comme gaz actif, un mélange gazeux qui contient entre 90 et 98% en poids d'oxygène.

2. Procédé suivant la revendication 1, caractérisé en ce que la destruction de l'ozone résiduel est effectuée par voie thermique ou par voie catalytique.

3. Procédé suivant la revendication 1, caractérisé en ce que le mélange gazeux débarrassé de l'ozone est épuré avant de traverser l'installation d'adsorption à variation de pression (3).

4. Procédé suivant la revendication 1, caractérisé en ce que, dans l'installation d'adsorption à variation de pression (3), le gaz est séché et décomposé en un gaz riche en oxygène.